# EUROPEAN PATENT APPLICATION

(11) **EP 2 869 420 A1**
(43) Date of publication of application: **06.05.2015**
(21) Application number: 13191086.1
(22) Date of filing: 31.10.2013
(51) Int. Cl.: H02J 3/00, H02J 3/38, H02J 3/02, H02J 3/04, H02M 5/44, H02M 7/04, E21B 3/02, H02M 1/12, H02J 1/10, H02J 3/01

(54) **Power system for a floating vessel**

(71) Applicant: Siemens Aktiengesellschaft, 80333 München (DE)
(72) Inventor: Kaarstad, Vemund, 0981 Oslo (NO)

(57) **Abstract**

A power system for a floating vessel, in particular a drilling vessel, is provided. The power system (100) has at least two AC transformer units (21, 22) adapted to provide transformation of AC electric power, each AC transformer unit comprising a power input coupled to an AC power supply system of the floating vessel and at least two power outputs (25) for providing AC electric power. At least two rectifier units (31, 32) of the power system receive AC electric power from the at least two transformer units (21, 22), wherein each rectifier unit has at least two rectifiers (35) for providing DC electric power. Each rectifier is coupled to a different power output of the at least two transformer units (21, 22) for receiving AC electric power. At least two DC power distribution busses (41, 42) are configured to distribute DC electric power received from the at least two rectifier units (31, 32) to one or more loads (140).

## Description

### Field of the invention

The invention relates to a power system for a floating vessel, in particular a drilling vessel, and to a method of providing a power system for a floating vessel.

### Background

In the offshore oil and gas production, floating drilling vessels, such as offshore platforms (e.g. semi-submersibles), drilling rigs, jack-up rigs or drill ships are used for exploratory offshore drilling and for drilling offshore wells. Such vessels may be termed floating mobile offshore drilling units (MODUs).

Furthermore, floating vessels used in the offshore oil and gas production include FPSOs (Floating Production Storage and Offloading Vessels), and other types of vessels. Several technical difficulties are involved in offshore drilling. Generally, such drilling vessels will have an on-board power generation system for generating the electric power required to operate for example the thrusters of the vessel and the drilling equipment. Drilling equipment may for example comprise a top-drive, drawworks for raising and lowering the drill string, mud pumps and the like. A substantial amount of electric power can be required for operating such equipment. In difficult conditions, the drilling equipment may for example require an electric power of more than 5 or even 10 MW. Such floating vessel comprises further electric consumers requiring a substantial amount of electric power, such as thruster drives, which may need to be operated continuously for dynamic positioning, anchor winches, cranes and auxiliary devices, such as cooling and lubrication pumps and the like. In order to be capable of operating the multiple electric motors of the drilling equipment efficiently and to provide a relatively simple structure of the power supply system, it is known to use so called multi-drive solutions. These can for example use a DC power distribution bus which is fed via a rectifier. The motors are coupled to DC bus via individual inverters, so that the speed of each motor can be controlled.

In particular for drilling operations, it needs to be ensured that the power system is available at all times, and that a blackout of one component of the power system does not lead to a shut-down of the whole system. As an example, if during a drilling operation, the drawworks would no longer be functional, and the drill string could no longer be raised, this might lead to a serious incident. To prevent such incidents, the power system of such floating vessel is generally separated into several sections. The vessel may for example comprise two or more such multi-drives, each operating motors of the drawworks. The DC power distribution bus of the multi-drive is generally provided with electric power via a transformer and a rectifier. Accordingly, if one of these components fails, or if the supply of power to the transformer or rectifier is interrupted, the whole multi-drive and all connected motors lose power. Although the electric motors connected to drives in other sections of the power system remain operational, such loss in power to one of the multi-drives may already be detrimental to the drilling operation.

In order to increase safety and to avoid such loss of a multi-drive, it is known to provide bus ties between the DC power distribution buses of different drives. The bus ties can connect the DC power distribution buses of two or more multi-drives together, so that if the power supply to one of the DC power distribution buses is lost, this DC bus can be supplied with electric power via another DC power distribution bus. The problem which such solutions is that fault currents in the system are increased significantly. In particular, during a short circuit fault at the DC side of the power system, a very high peak-energy may be released, which can lead to damage to the equipment and which is furthermore a safety concern, it may lead to personal injury. In order to control the current level occurring upon a fault, a possibility might be the installation of fault current limiters in the bus ties. Yet such fault current limiters generally are relatively complex, require additional space/weight and increase the cost of the system.

It is desirable to increase the operational safety of a power system of such floating vessel while avoiding that the system becomes more complex and requires more space or has increased weight. In particular, it is desirable to be capable of continuing operation of equipment coupled to such multi-drives in case of a loss of power supply to one of the multi-drives. Furthermore, it is desirable to be able to continue operation of the multi-drives in case of such fault with only a short or minimal delay. It is also desirable to increase the safety of the power system, in particular to avoid very high fault currents.

### Summary

Accordingly, there is a need for an improved power system for a floating vessel which mitigates at least some of the drawbacks mentioned above.

This need is met by the features of the independent claims. The dependent claims describe embodiments of the invention.

According to an embodiment, a power system for a floating vessel, in particular a drilling vessel, is provided. The power system comprises at least two AC transformer units adapted to provide transformation of AC electric power. Each AC transformer unit comprises a power input coupled or coupleable to an AC power supply system of the floating vessel and at least two power outputs for providing AC electric power. The power system further comprises at least two rectifier units receiving AC electric power from the at least two transformer units, wherein each rectifier unit comprises at least two rectifiers for providing DC electric power. Each rectifier is coupled to a different power output of the at least two transformer units for receiving AC electric power. The power system further comprises at least two DC power distribution buses configured to distribute DC electric power received from the at least two rectifier units to one or more loads. The power system is configured such that in operation, each of the DC power distribution buses is supplied with electric power via at least two of the AC transformer units.

Accordingly, in such configuration, if one of the AC transformer units should fail, the respective DC power distribution bus may be supplied with electric power from another AC transformer unit to which it is coupled. Furthermore, since in normal operation, the DC power distribution bus is already supplied with electric power via at least two of the AC transformer units, it may not be necessary to perform switching operations for re-establishing the power supply to the respective DC power distribution bus, but operation may continue with only short or no delay after isolating the faulty component from the power system. In particular compared to the operation of mechanical interconnectors for the DC power distribution buses and the delay associated with their operation, the delay can be reduced significantly. 'In operation' refers to normal operation, i.e. to an operation when no blackout is present in the power system.

Furthermore, it may not be necessary to interconnect the at least two DC power distribution buses for continuing operation in case the power supply via one of the at least two AC transformer units is interrupted. Accordingly, the fault current on the DC power distribution buses may not be increased significantly or at all, resulting in an improved operational safety of the power system. Furthermore, for reducing the fault current in the DC distribution, fault current limiters may not be required, thus keeping cost and complexity of the power system relatively low. In particular drilling vessels may benefit from such configuration of the power system.

Floating drilling vessels may employ active heave compensation which compensates for the up and down motion of the vessel due to sea waves. The active heave compensation system lowers or raises the drill string, so as to keep the weight on bit almost constant. The power rating of the power system, in particular of the drives, may needs to be increased significantly for such active heave compensation. This results in comparatively high-load levels in the case of a fault. Increased safety risks are thus involved with interconnecting the DC power distribution buses upon occurrence of a fault. This may be prevented by making use of the configuration according to embodiments of the invention, where fault current levels may not be increased even upon failure of the supply with electric power via one of the at least two AC transformer units.

In an embodiment, each DC power distribution bus is associated with one of the at least two rectifier units, wherein DC outputs of all rectifiers of the respective rectifier unit are connected to the associated DC power distribution bus. This may allow a relatively compact power system design. In particular, the rectifier unit and the associated DC power distribution bus, which may belong to the same section of the power system, may be located physically adjacent to each other, for example within the same or adjacent cabinets. Furthermore, it allows physical separation, e.g. by providing different rectifier units together with their associated DC power distribution buses in different sections of the power system, thus increasing the safety of the power system.

In some embodiments, each rectifier of the rectifier units may have a DC output, and the DC outputs of the rectifiers of the same rectifier unit may be connected together so as to provide a single DC output of the rectifier unit. The single DC output of the rectifier unit may then be coupled to an associated DC power distribution bus.

In an embodiment, the at least two power outputs of one AC transformer unit are coupled to at least two different rectifier units. This may allow for a relatively simple configuration of the power system, as for example, a cable may be provided which connects the power output of an AC transformer unit of one section of the power system to a rectifier unit provided in another section of the power system. Each AC transformer unit may for example be associated with a rectifier unit and a DC power distribution bus. In other embodiments, the AC transformer units may each have three power outputs, and one or two of these power outputs may be coupled to the associated rectifier unit, and two or one power output may be coupled to another rectifier unit, respectively. In other embodiments, each power output of an AC transformer unit may be coupled to a different rectifier unit.

In an embodiment, each AC transformer unit is configured such that the electric power provided at each of its at least two power outputs is phase-shifted with respect to the electric power provided at its other power outputs. As an example, one power output may have no phase shift and another power output may be phase shifted by 30 degrees, or, for a transformer unit having three power outputs, one power output may be at 0 degree phase-shift, one at 20 degree phase-shift and one at 40 degree phase-shift. Further power outputs and different phase-shifts may of course be provided.

In an embodiment, at least two rectifiers of one rectifier unit are coupled to the power outputs of different AC transformer units. In even further embodiments, each rectifier of one rectifier unit may be coupled to the power outputs of different AC transformer units. As an example, the three rectifiers of a rectifier unit may be coupled to three different AC transformer units, or two of these three rectifiers may be coupled to the same AC transformer unit. Availability of the respective DC power distribution bus may thus be further increased, and it may be achieved that the DC power distribution bus, which lost the main power supply through the associated AC transformer unit, may continue to be operated at almost 100 % of its load capacity.

In an embodiment, each rectifier of one of the rectifier units may be coupled to the power outputs of the at least two AC transformer units such that each rectifier receives AC electric power at a different predetermined phase. As an example, each rectifier unit may be a multi-pulse rectifier. By receiving AC electric power at different predetermined phases, i.e. with a phase-shift at the different AC power inputs, harmonic distortions in the DC power generated by the multi-pulse rectifier may be reduced. As outlined above, the different power outputs of one AC transformer unit may be face-shifted with respect to each other, and each rectifier unit may then be coupled to two or more AC transformer units such that each of the received AC electric power has a different phase. As an example, each rectifier of the rectifier unit may have an AC power input, and each AC power input of the rectifier unit may be supplied with AC electric power having a different phase (i.e. phase-shifted with respect to each other).

As an example, each rectifier unit may be a 12-pulse, 18-pulse or a 24-pulse rectifier. Each rectifier unit may then for example comprise two, three or four, respectively, 6-pulse rectifiers. The rectifiers may for example be bridge-rectifiers, they may be diode rectifiers, IGBT (Insulated Gate Bipolar Transistor) rectifiers, thyristor rectifiers or the like.

The number of power outputs of the AC transformer units may for example be adapted in accordance with the type of rectifier units used, or vice versa.

Each AC transformer unit may for example comprise or consist of an AC transformer having a primary winding and having two, three, four or more secondary windings, each secondary winding providing one of the at least two power outputs. An AC transformer with three secondary windings may thus have three power outputs, with four secondary windings four power outputs and so on. The secondary windings may be arranged such that AC power provided at the at least two power outputs is phase shifted with respect to each other.

An exemplary configuration may use AC transformers having two secondary windings, with a 30 degrees phase-shift between the two power outputs, and 12-pulse rectifiers. Another configuration may use AC transformers having three secondary windings providing three power outputs having a 20 degrees phase-shift, and 18-pulse rectifiers. A further configuration may use AC transformers having four secondary windings providing four power outputs with 15 degrees phase-shift, and 24 pulse rectifiers.

In an embodiment, the power system comprises at least two power system sections. Each power system section comprises one of the transformer units, one of the rectifier units and one of the DC distribution buses. For each power system section, at least one power output of the respective AC transformer unit is coupled to a rectifier of the respective rectifier unit. In other words, at least one rectifier is supplied with AC electric power by means of the AC transformer unit of the same power system section. Furthermore, the output of each rectifier of the rectifier unit is coupled to the DC power distribution bus of the same power system section, for providing DC power to the DC power distribution bus. One or more other power outputs of the transformer unit can be coupled to rectifier units of other power system sections. Accordingly, one rectifier unit can be supplied with electric power via the transformer units of different power system sections. If the power supply to one power system section becomes unavailable, the rectifier unit of this power system section can still be operated and supplied with electric power. The connections from the AC transformer units to the rectifier units may accordingly be "revolved" between the different power system sections. Furthermore, the power system sections may be physically separate from each other. Accordingly, if a blackout or a fire occurs in one power system section, the other power system sections may not be affected.

Each power system section may comprise a variable speed drive (VFD), in particular the multi-drive. The rectifier unit and the DC bus may form part of the variable speed drive of the respective power system section. As an example, the DC bus may constitute a DC link of the variable speed drive. The variable speed drive, in particular the multi-drive, may for example be a drilling drive. The variable speed drive may power plural electric motors and may allow the control of their speed by controlling the frequency of AC power supplied to these electric motors, e.g. by means of respective inverters coupled to the DC power distribution bus. Such electric motors may for example comprise motors for operating at least one of a drawworks, a top-drive, a mud pump, a cementing pump and the like.

In an embodiment, the at least two AC transformer units comprise a first AC transformer having at least a first and a second power output and a second AC transformer having at least a first and a second power output. The at least two rectifier units may comprise a first rectifier unit associated with a first of the DC power distribution buses (they may be in the same power system section) and a second rectifier unit associated with a second of the DC power distribution buses. The first power output of the first AC transformer may be coupled to a first rectifier of the first rectifier unit, and the second power output of the first AC transformer may be coupled to a second rectifier of the second rectifier unit. Furthermore, the first power output of the second AC transformer may be coupled to a first rectifier of the second rectifier unit, and the second power output of the second AC transformer may be coupled to a second rectifier of the first rectifier unit. By revolving the electric connections between the first and second AC transformer units and the first and second rectifier units in such way, a relatively simple but effective way of increasing the reliability of the power system and avoiding high fault currents in the DC power distribution buses may be realized.

In an embodiment, the at least two transformer units comprise at least a first, a second and a third AC transformer unit. Each AC transformer unit comprises at least three power outputs which are phase-shifted with respect to each other. The at least two rectifier units comprise at least a first, a second and a third rectifier unit each having at least three rectifiers, e.g. 6-pulse rectifiers. The power system may further comprise at least a first, a second and a third DC power distribution bus associated with the respective first, second and third rectifier units (and coupled thereto). Each rectifier unit may have one rectifier connected to a power output of the first AC transformer unit, one rectifier connected to a power output of the second AC transformer unit, and one rectifier connected to a power output of the third AC transformer unit. Using such configuration, reliability and availability of the power system may be further improved.

As an example, each AC transformer unit may be over-rated, they may for example have 150 % of the rating of the load capacity of the respective DC power distribution bus (i.e. in the same power system section). With such overrating, if one AC transformer unit fails, the remaining AC transforming units can still provide each DC power distribution bus with 100 % of rated power. In the above configuration, the rectifier unit associated with the respective DC power distribution bus will be supplied with AC electric power from the two remaining AC transformer units. Since these deliver a total of at least 300 % of the rating, each DC power distribution bus can be supplied with 100 % of its load capacity.

In another embodiment, two rectifiers of each rectifier unit may be connected to the same AC transformer unit, and at least one rectifier may be connected to a different AC transformer unit. In such configuration, only one power output of each AC transformer unit may be revolved, thus simplifying the connection scheme.

The power system may be configured such that upon occurrence of a blackout of the supply with electric power via one of the at least two AC transformer units, the at least two DC power distribution buses remain separated, i.e. are not interconnected (by a DC bus tie or the like). In particular, no automatically operable DC bus tie or power electronic breaker may be provided between the DC power distribution buses. The at least two DC power distribution buses may be configured so as to be not connected or not connectable to each other. In some embodiments, the at least two DC power distribution buses may be inter-connectable by means of a mechanical switch only or may not be inter-connectable.

The rectifiers of a rectifier unit may be physically grouped together. In particular, the rectifiers of a rectifier unit may be provided within the same or adjacent housings or cabinets.

The power system may furthermore comprise at least two AC power distribution buses. Each AC power distribution bus may be coupled or coupleable to a generator for receiving AC electric power. Each of the at least two AC transformer units may be coupled to a different AC power distribution bus. Accordingly, if one AC power distribution bus fails, or the supply of electric power thereto is interrupted, the AC transformer unit coupled to the other AC power distribution bus will still be operable and receive AC electric power. In some embodiments, the power system comprises at least three AC power distribution buses, and at least three AC transformer units, each being coupled to a different AC power distribution bus. The at least three AC power distribution buses may be connectable or connected by means of AC bus ties in a ring configuration. Furthermore, each AC power distribution bus may be connected or connectable to one or more generators for receiving AC electric power. In such configuration, the load on the generators can be distributed by the ring configuration of the AC power distribution buses. A further advantage is that harmonic distortions on the AC power distribution buses may be reduced or prevented in such configuration. As an example, if there are different loads on the different DC power distribution buses, such variations may increase harmonic distortions. By connecting the AC power distribution buses in a closed ring configuration, e.g. by the above mentioned AC bus ties, the effect of such uneven loads may be reduced or may even be negligible.

The power system may be a three phase power system. For example, each power output of the AC transformer units may be provided for each of the three phases, and a secondary winding of an AC transformer may similarly be provided for each of the three phases. Similarly, each rectifier may have an AC input for each of the three phases. A rectifier unit with three rectifiers may thus for example have 9 AC inputs.

According to a further embodiment of the invention, a method of providing a power system for a floating vessel is provided. The method comprises the steps of providing at least two AC transformer units adapted to provide transformation of AC electric power, each AC transformer unit comprising a power input and at least two power outputs for providing AC electric power; coupling the power input of the at least two AC transformer units to an AC power supply system of the floating vessel; providing at least two rectifier units receiving AC electric power from the at least two transformer units, wherein each rectifier unit comprises at least two rectifiers for providing DC electric power; and coupling each rectifier to a different power output of the at least two transformer units for receiving AC electric power. The method further comprises the steps of providing at least two DC power distribution buses configured to distribute DC electric power to one or more loads and of coupling the at least two DC power distribution buses to the at least two rectifier units for receiving DC electric power from the at least two rectifier units. The coupling is performed such that in operation, each of the DC power distribution buses is supplied with electric power via at least two of the AC transformer units.

With such method, a power system may be provided which has advantages similar to the ones outlined further above.

In an embodiment of the method, the method may be performed such that a power system in any of the above outlined embodiments or configurations is provided. In particular, the coupling may be performed such that any of the above described coupling configurations is achieved.

Coupling the at least two DC power distribution buses to the at least two rectifier units may for example be performed such that each rectifier unit provides one DC power output to which a power distribution bus is coupled, or each rectifier unit may provide one DC power output per rectifier, and the DC power distribution buses are coupled to the DC power outputs of the rectifiers. In some embodiments, the coupling may be such that the rectifiers of one rectifier unit are coupled to different DC power distribution buses, so as to achieve that the different DC power distribution buses are supplied with electric power through different AC transformer units. In such embodiments, all outputs of one AC transformer unit may be coupled to a single rectifier unit. As outlined above, in other embodiments, the coupling between the AC transformer units and the rectifier units may be revolved, thus ensuring that each DC power distribution bus is supplied with electric power via different AC transformer units.

It is to be understood that the features mentioned above and those yet to be explained below can be used not only in the respective combinations indicated, but also in other combinations or in isolation, without leaving the scope of the present invention.

### Brief description of the drawings

The foregoing and other features and advantages of the invention will become further apparent from the following detailed description read in conjunction with the accompanying drawings. In the drawings, like reference numerals refer to like elements.
Figure 1 is a schematic block diagram showing a power system according to an embodiment of the invention.
Figure 2 is a schematic block diagram showing a power system according to an embodiment of the invention.
Figure 3 is a schematic block diagram showing a power system according to an embodiment of the invention.
Figure 4 is a flow diagram illustrating a method according to an embodiment of the invention.

### Detailed description

In the following, embodiments of the invention will be described in detail with reference to the accompanying drawings. It is to be understood that the following description of the embodiments is given only for the purpose of illustration and is not to be taken in a limiting sense.

It should be noted that the drawings are to be regarded as being schematic representations only, and elements in the drawings are not necessarily to scale with each other. Rather, the representation of the various elements is chosen such that their function and general purpose become apparent to a person skilled in the art. It is also to be understood that the coupling of physical or functional units as shown in the drawings and described hereinafter does not necessarily need to be a direct connection of coupling, but may also be an indirect connectional or coupling, i.e. a connection or a coupling with one or more additional intervening elements, such as fuses, circuit breakers, and the like. A skilled person will further appreciate that the physical or functional units illustrated and described herein with respect to the different embodiments do not necessarily need to be implemented as physically separate units. One or more physical or functional blocks or units may be implemented in a common circuit, chip, circuit element or unit, while other physical or functional blocks or units shown may be implemented in separate circuits, chips, circuit elements or units.

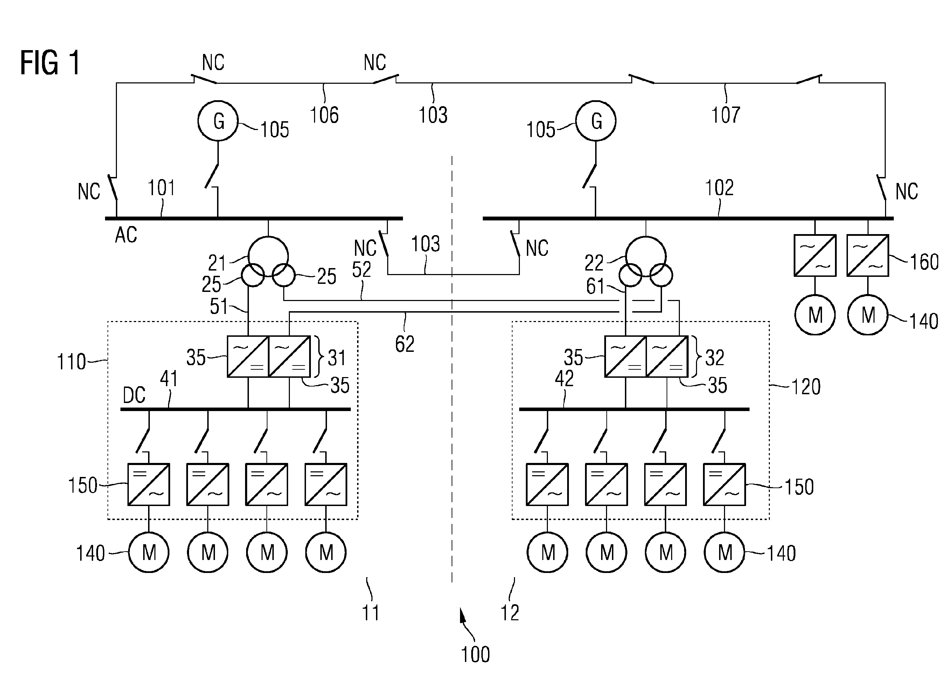

Figure 1 is a schematic drawing showing a power system 100 of a floating vessel according to an embodiment of the invention. The power system 100 has a first power system section 11 which comprises the first AC power distribution bus 101 to which one or more generators 105 are coupled. To the AC power distribution bus 101, an AC (alternating current) transformer unit 21 is connected, e.g. via a circuit breaker (not shown). The first power system section 11 further comprises a first multi-drive 110 which includes the first rectifier unit 31. Rectifier unit 31 has in the embodiment of figure 1 two rectifiers 35, yet it may include further rectifiers. The first power system section 11 includes the DC (direct current) power distribution bus 41 which receives DC electric power from the rectifier unit 31, and which forms part of the first multi-drive 110. Loads coupled to the DC power distribution bus 41 include the inverters 150 and electric motors 140, the inverters 150 forming part of the multi-drive 110. By means of inverters 150, AC electric power at variable frequency can be generated and supplied to the electric motors 140 in order to drive the electric motors 140 at a controllable variable speed. The multi-drive 110 is thus a variable speed drive for plural electric motors 140. The DC power distribution bus 41 forms a DC link of the multi-drive 110, connecting the output of the rectifiers 35 to the input of the inverters 150.

Multi-drive 110 may for example be a drilling drive of a drilling vessel. The electric motors 140 coupled thereto may include electric motors for operating drawworks, a top-drive, a mud pump, a cement pump and the like.

The power system 100 comprises a second power system section 12 which is configured correspondingly. In particular, it also comprises an AC power distribution bus 102 coupled to a generator 105, a second AC transformer unit 22, a second rectifier unit 32, a second DC power distribution bus 42 to which inverters 150 and electric motors 140 are coupled. The second rectifier unit 32, the second DC power distribution bus 42 and the inverters 150 are part of a second multi-drive 120, which again can be a drilling drive.

To each AC power distribution bus 101, 102 plural generators 105 can be coupled. By means of the AC bus tie 103, the two AC power distribution buses 101, 102 can be interconnected, which allows a load sharing between the generators 105 coupled thereto. Furthermore, generators can be disconnected from one of the AC power distribution buses while still being capable of supplying the respective AC power distribution bus via the AC bus tie 103 with electric power. Bus tie breakers provided between the bus tie 103 and the respective AC power distribution buses 101, 102 are normally closed (NC), but may be opened in certain situations, for example during high risk operations or for separating the power system sections 11, 12.

Power system 100 may comprise further power system sections, e.g. one, two, three or more further power system sections. In the example of figure 1, two such further power system sections are indicated by the further AC power distribution buses 106 and 107, to which again generators may be coupled and to which loads including multi-drives similar to the drives 110, 120, thruster drives, auxiliary loads and the like may be coupled. If the power system 100 comprises at least three power system sections, each including an AC power distribution bus, the AC power distribution buses may be connected (by AC bus ties 103) in a ring configuration. This ring configuration is illustrated in figure 1 for a power system having four sections. Accordingly, if one AC power distribution bus is disconnected, e.g. due to the occurrence of a fault, the remaining AC power distribution buses can remain connected, thereby enabling an efficient and reliable operation of power system 100. It should be clear that in some embodiments, only two power system sections 11, 12 and corresponding AC power distribution buses 101, 102 may be provided, while in other embodiments, three, four or more power system sections and corresponding AC power distribution buses can be provided. While some embodiments may employ a ring configuration as illustrated in figure 1, other embodiments may employ a linear configuration with respect to the connection of the AC power distribution busses. Figure 1 furthermore schematically illustrates converters 160 which are thruster drives and to which the electric motors 140 of thrusters are connected. Such thruster drives may be coupled to one, two or more of the AC power distribution buses 101, 102, 106, 107. AC transformers (not shown) may be provided between the AC power distribution buses and the converters 160.

In a conventional system, the power outputs of the AC transformer units 21, 22 are coupled to the associated rectifier unit 31, 32 within the same power system section 11, 12. A fault may occur in which the supply of electric power to the rectifier unit 31 is interrupted, for example when AC power distribution bus 101 is isolated and disconnected from generators 105 and adjacent AC power distribution buses, or if a malfunction of the AC transformer unit 21 occurs. To maintain the operability of the first multi-drive 110, conventional systems may thus provide a DC bus tie between the first and second DC power distribution buses 41, 42, the bus tie breakers of which are in a normally open (NO) condition, and may be closed upon occurrence of a fault. This has the above mentioned drawbacks that upon occurrence of a further fault, e.g. at a load connected to a DC distribution bus, excessive fault currents can occur, which can lead to severe damage to the power system 100 and to the floating vessel and which may result in personal injury.

These disadvantages can be mitigated by a power system 100 having the configuration as illustrated in figure 1. As can be seen, no DC bus tie is provided between the first and second DC power distribution buses 41, 42. The AC transformer units 21, 22 are implemented as AC transformers having at least two secondary windings 25. Each secondary winding 25 provides a power output at which transformed AC electric power is provided. The AC electric power at different power outputs of the same AC transformer unit are phase-shifted with respect to each other. As an example, transformer 21 has two power outputs, one providing AC power at 0 degree phase-shift, the other providing AC electric power at 30 degree phase-shift. The second AC transformer 22 may be configured correspondingly.

The power system 100 is preferably embodied as a three-phase power system. Accordingly, each secondary winding 25 is provided for the three phases. In the figures, the three different phases are not shown separately in order to enable a clear and comprehensive presentation.

AC transformer unit 21 has one power output which is coupled, via connection 51, to one rectifier 35 of the associated rectifier unit 31, i.e. within the same power system section 11. The second power output of first AC transformer unit 21 is coupled to a rectifier 35 of the second rectifier unit 32 in the second power system section 12, by means of electric connection 52. Connection 51 may for example provide AC electric power at 0° phase-shift, while a connection 52 may provide AC electric power at 30° phase-shift.

The power outputs of the second AC transformer unit 22 are connected correspondingly. A first power output of AC transformer unit 22 is connected via connection 61 to a rectifier 35 of the second rectifier unit 32 within the same power system section 12, while the second connection 62 connects the second power output to a rectifier 35 of the first rectifier unit 31. Connection 61 may provide AC electric power at 0 degree phase-shift and connection 62 may provide AC electric power at 30 degree phase-shift.

First and second rectifier units 31, 32 are in the embodiment of figure 1 12-pulse rectifiers. They may for example be diode bridge rectifiers, yet ITBT or thyristor rectifiers may similarly be used. Full rectification will provide two DC pulses per phase, and thus six-pulses for three-phase AC electric power. By making use of two rectifiers 35 being provided with AC electric power having different phase shifts, 12-pulse rectification can then achieved. Rectifier unit 31 can thus provide DC electric power having relatively low harmonic distortions to DC power distribution bus 41. The second rectifier unit 32 can be configured correspondingly.

Each rectifier 35 of the rectifier units 31, 32 accordingly provides an input for AC electric power having a different phase shift. In other embodiments, further secondary windings 25 and further rectifiers 35 may be provided, for example for providing 18-pulse or 24-pulse rectification.

As can be seen, by means of the electric connections 52, 62, the rectifier units 31, 32 will now receive AC electric power from different power system sections. In consequence, if one of the AC transformer units 21, 22 fails, or if the power supply to such AC transformer unit is interrupted, the associated rectifier unit 31, 32 will still receive electric power from the other power system section. In the example of figure 1, the AC transformer units 21, 22 may be overrated, e.g. they may have a rating of about 150 % or more, e.g. about 200%, of the load capacity of the associated multi-drives 110, 102. In the former case, each multi-drive 110, 120 may then be operated at 75 % of its rating, or one drive may be operated at 50 % and the other at 100 %. In the latter case, each drive may continue to operate at 100 %, even if both drives are supplied by via only one of the first or second AC transformer units 21, 22.

Availability and reliability of the power system 100 may thus be improved significantly. Furthermore, the electric connections 52, 62 may be provided by laying cables between the power system sections 11, 12, thus keeping the complexity of power system 100 low. Also, the additional space and weight required by such cables is relatively low compared to solutions which make use of load current limiters or the like.

It has to be noted that the main power distribution on the floating vessel is performed by means of the two or more AC power distribution busses (the busses 101, 102, 106, 107 in the example of figure 1). The DC power distribution busses 41, 42 only distribute electric power within the same multi-drive 110, 120, respectively. I.e. each DC power distribution bus provides power distribution within a variable speed drive, thereby allowing the variable speed drive to power plural electric motors (via plural inverters 150 comprised in the variable speed drive), thus implementing a multi-drive.

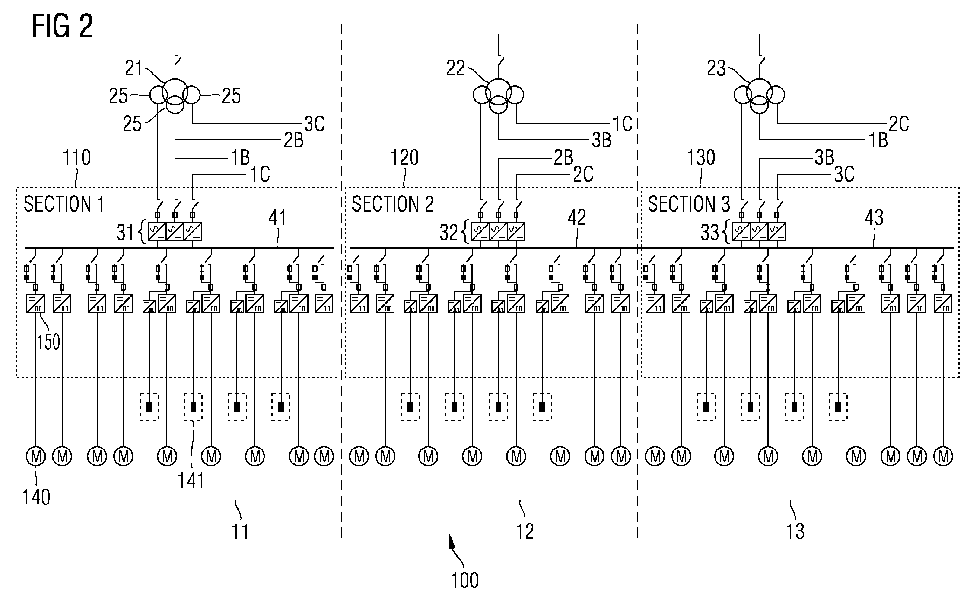

Figure 2 shows a power system 100 according to a further embodiment of the invention. The power system 100 of figure 2 comprises components corresponding to those of figure 1, so the explanations given above are equally applicable. For the purpose of a comprehensive presentation, most components of the AC part of the power system 100 are omitted in figure 2, but they may form part of the power system 100. Power system 100 may in particular comprise AC power distribution busses and respective bus ties, as described with respect to figure 1.

The power system of figure 2 comprises three power system sections 11, 12, 13, but it should be clear that in other embodiments, fewer or more power system sections may be provided. Each power system section can comprise at least one AC power distribution bus.

In the embodiment of figure 2, the AC transformer unit 21, 22, 23 of each power system section 11, 12, 13 is implemented as an AC transformer having three secondary windings. As mentioned above, the system is a three phase power system, so each secondary winding is provided for the three AC phases. Each secondary winding provides a power output, wherein the secondary windings are configured such that the AC electric power at each of the three power outputs has a different phase shift. As an example, the first power output may have about 0 degree phase shift, the second power output may have about 20 degree phase shift and the third power output may have about 40 degree phase shift. Since it is a three phase system, this will result in a total of 9 phase shifted AC voltages supplied by each AC transformer 21, 22, 23. The AC transformers 21, 22, 23 can be configured similarly, and can be supplied with AC electric power from the same AC power source (e.g. the above mentioned AC power distribution busses, which can have a closed ring configuration). Accordingly, the AC transformers 21, 22, 23 may deliver AC voltages at their power outputs having substantially the same phase shifts.

The rectifier units 31, 32, 33 of the respective power system sections 11, 12, 13 are implemented as 18 pulse rectifiers. Each rectifier unit 31, 32, 33 comprises three 6 pulse rectifiers 35. Each rectifier 35 is connected to a power output provided by a secondary winding of the AC transformer units 21, 22, 23. Since it is a three phase system, each rectifier 35 thus receives three AC voltages at predefined phase shifts. Full wave rectification thus delivers for each rectifier a DC voltage having 6 pulses. Since each rectifier 35 receives a AC voltage at a different phase shift from the different secondary windings, a DC voltage with a total of 18 pulses results from the rectification by each rectifier unit 31, 32, 33. In order to achieve such rectification, the power system 100 is thus configured such that each rectifier of a rectifier unit 31, 32, 33 receives AC electric power with a different, predefined phase shift. In particular, the phase shifts provided by the secondary windings of the AC transformer units 21, 22, 23 are such that they are different from the phase shifts between the three phases of the three phase power system (generally 0°, 120° and 240°).

In order to ensure the supply of electric power to the multi-drives 110, 120, 130 in case of a blackout of power supply via one of the AC transformer units 21, 22, 23, each power output of each transformer unit is connected to the rectifier unit of a different power system section 11, 12, 13. In particular, for each AC transformer unit, one power output is connected to the first rectifier unit 31, one power output is connected to the second rectifier unit 32, and one power output is connected to the third rectifier unit 33. The power outputs are connected such that each rectifier unit 31, 32, 33 receives AC electric power with three different phase shifts, i.e. at each power input of the rectifier unit, the received AC voltage has a different phase shift.

For the purpose of clarity, the electric connections between the AC transformer units and the rectifier units are in fig ure 1 not fully shown. The connections at the AC transformer units and the rectifier units are referenced by symbols, and connections having the same symbols are connected together (i.e. connection 3C on AC transformer 21 is electrically connected to the connection 3C on rectifier unit 33 and so on). As can be seen from the drawing, each rectifier unit 31 is connected to a first secondary winding of the AC transformer of a first power system section, to a second secondary winding of the AC transformer of a second power system section, and to a third secondary winding of the AC transformer of a third power system section. Each rectifier unit 31, 32, 33 thus receives AC electric power at three different phase shifts from three different power system sections.

If the supply with electric power to the AC transformer unit or the AC transformer unit itself of one power system section fails, each rectifier unit will still receive electric power via the AC transformer units of the remaining power system sections. As an example, each AC transformer unit may be overrated at about 150% or more of the load capacity of the respective DC power distribution bus. After the blackout of one AC transformer unit, each DC power distribution bus 41, 42, 43 can then still be operated at 100% of its load capacity. Further, each rectifier unit will still provide a 12 pulse rectification if the supply of electric power to one of their rectifiers is stopped. In consequence, harmonic distortions on the DC power distribution busses 41, 42, 43 can be kept low, and the multi-drives 110, 120, 130 remain fully operational after such blackout. Also, there is almost no delay for continuing operation, since it is not necessary to close any DC bus tie breakers.

A further advantage is that excessive fault currents can be prevented. The power system 100 may be adapted to supply electric power to an active heave compensation system, and multi-drives 110, 120 and 130 may be drilling drives. Electric motors 140 can comprise electric motors of a drawworks which is provided for raising and lowering the drill string. During active heave compensation, when the floating vessel is raised by a sea wave, the drill string must be lowered, thus generating electric power in the motors of the drawworks. Excess electric power may cause the voltage on the DC power distribution busses 41, 42, 43 to rise. To limit the voltage on the DC busses, braking resistors 141 can be provided for removing excess energy from the multi-drives. In such operating states, if there was a fault on one of the DC power distribution busses, coupling the DC power distribution busses together by DC bus ties would result in extremely high fault currents. This can be prevented by the configuration of the power system 100 according to the embodiments of figures 1, 2 and 3, in which such DC bus ties are not required for providing increased reliability and black-out protection.

Figure 2 further illustrates that circuit breakers or switches may be connected between different components of the power system 100, e.g. between the AC transformer units and the rectifier units, or between the DC power distribution busses and the loads. Also, the multi-drives 110, 120, 130 may comprise further components, such as resistances and inductances which can be switched between DC power distribution bus and load, e.g. for providing a soft start of the respective load.

It should be clear that figure 2 only illustrates an exemplary configuration of the power system 100, and that the power system 100 can be implemented in different ways. As an example, it may comprise more or fewer power system sections, it may be configured with 12-pulse or 24-pulse rectification, or the variable speed drives 110, 120, 130 may power only a single load, with the DC power distribution bus forming a DC link of the respective variable speed drive. The AC transformers 21, 22, 23 may each be rated for an apparent power of more than 1 MVA, 3 MVA or even more than 5 MVA. The power rating of electric motors connected to the DC power distribution busses may for example be equal or higher that 100kW or 500kW, and may range up to 5MW or even 10MW. In some embodiments, the DC power distribution busses may provide electric power to thrusters of the floating vessel, i.e. the loads may comprise thrusters. In other embodiments, thrusters may be directly connected to AC power distribution busses of the power system 100, e.g. via a transformer and a converter (variable frequency drive).

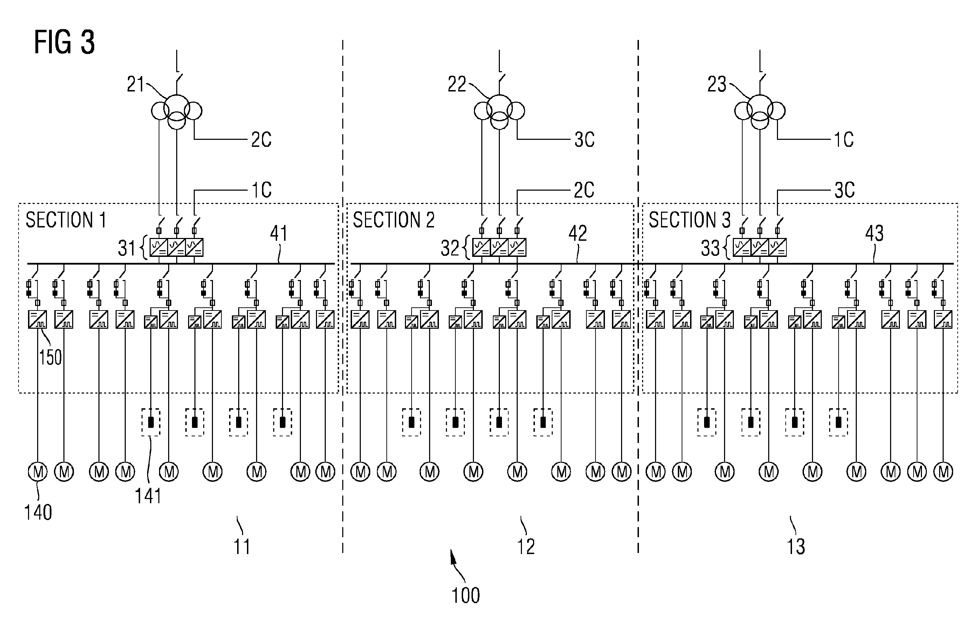

Figure 3 shows a power system 100 according to a further embodiment, which is a modification of the embodiment of figure 2. The explanations given above are thus equally applicable to the embodiment of figure 3. In the power system 100 of figure 3, two power outputs (provided by two secondary windings) of each AC transformer unit are connected to the rectifier unit in the same power system section (i.e. to the associated rectifier unit). Only one power output of the AC transformer units 21, 22, 23 is 'revolved' between the different power system sections 11, 12, 13. A simplified configuration of the power system 100 may thus be achieved. With the above mentioned rating of the AC transformer units of at least 150%, the load capacity of a DC power distribution bus can still be maintained at or exceed 50% of the normal load capacity when there is a blackout of the associated AC transformer unit (i.e. the AC transformer unit in the same power system section), or when the supply of electric power thereto is disturbed. Higher over-rating of the AC transformer units may further increase the available load capacity of the DC power distribution buses in case of such blackout.

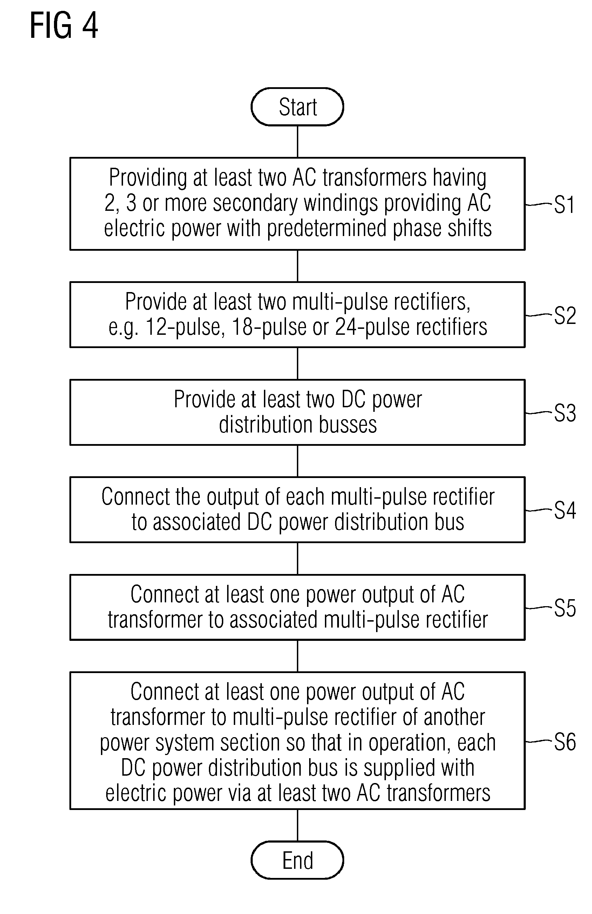

The flow diagram of figure 4 illustrates a method of providing a power system for a floating vessel according to an embodiment of the invention. In step S1, at least two AC transformers having 2, 3, or more secondary windings are provided. The secondary windings provide transformed AC electric power with predetermined phase shifts at respective power outputs. In step S2, at least two rectifier units in form of multi-pulse rectifiers are provided. As an example, for AC transformer units having 2, 3 or 4 secondary windings, 12-, 18- or 24-pulse rectifiers may be provided, respectively. At least two DC power distribution busses are provided in step S3. Different power system sections can each be provided with an AC transformer unit, a rectifier unit and a DC power distribution bus.

In step S4, the output of each multi-pulse rectifier is connected to the associated DC power distribution bus (i.e. in the same power system section). Each rectifier of the rectifier unit may provide a DC power output which is connected to the DC power distribution bus, or the outputs of each rectifier may be connected together within the rectifier unit, e.g. by means of a link, e.g. a short copper bar link or the like. A single connection may then be provided from the rectifier system to the DC power distribution bus.

In step S5, for each AC transformer unit, at least one power output is connected to the multi-pulse rectifier in the same power system section (i.e. to the associated multi-pulse rectifier). Another power output is connected to the multi-pulse rectifier of another power system section (step S6). Accordingly, by such method, a power system similar to the one illustrated in figure 1 may be obtained, and the advantages described with respect thereto may be achieved.

In other embodiments of the method, the method may be performed so as to obtain the power system described with respect to figure 2 or figure 3. The features described with respect to the above embodiment of the method may also be implemented in the power systems of figures 1, 2 and 3.

The embodiment of the power system and of the method may be implemented on a floating mobile offshore drilling unit (MODU). The multi-drives of such vessels can be configured to control active heave compensation as well as drilling motors. Especially for dynamically positioned vessels, redundancy in the power supply to the multi-drives is required. Embodiments of the invention enable such redundant power supply while at the same time achieving a fast and safe transfer between power sources. The delay, which is common to the operation of mechanical interconnectors between DC power distribution busses, can be essentially eliminated with embodiments of the power system disclosed herein. Also, compared to solutions using fault current limiters, the number of fault sources is reduced and the physical and operational integrity of the multi drives may be improved. A redundant power supply to the multi-drives of different power system sections of the vessel can be provided in a safe and secure manner.

## Claims

1. A power system for a floating vessel, in particular a drilling vessel, comprising
- at least two AC transformer units (21, 22, 23) adapted to provide transformation of AC electric power, each AC transformer unit (21, 22, 23) comprising a power input coupled to an AC power supply system of the floating vessel and at least two power outputs for providing AC electric power,
- at least two rectifier units (31, 32, 33) receiving AC electric power from the at least two transformer units, wherein each rectifier unit (31, 32, 33) comprises at least two rectifiers (35) for providing DC electric power, wherein each rectifier (35) is coupled to a different power output of the at least two transformer units (21, 22, 23) for receiving AC electric power, and
- at least two DC power distribution busses (41, 42, 43) configured to distribute DC electric power received from the at least two rectifier units (31, 32, 33) to one or more loads (140),
wherein the power system is configured such that in operation, each of the DC power distribution busses (41, 42, 43) is supplied with electric power via at least two of the AC transformer units (21, 22, 23).

2. The power system according to claim 1, wherein each DC power distribution bus (41, 42, 43) is associated with one of the at least two rectifier units (31, 32, 33), wherein DC outputs of all rectifiers (35) of the respective rectifier unit are connected to the associated DC power distribution bus.

3. The power system according to claim 1 or 2, wherein the at least two power outputs of one transformer unit (21, 22, 23) are coupled to at least two different rectifier units (31, 32, 33).

4. The power system according to any of the preceding claims, wherein each transformer unit (21, 22, 23) is configured such that the electric power provided at each of its at least two power outputs is phase shifted with respect to the electric power provided at its other power outputs.

5. The power system according to any of the preceding claims, wherein at least two rectifiers (35) of one rectifier unit (31, 32, 33) are coupled to the power outputs of different AC transformer units (21, 22, 23), or wherein each rectifier of one rectifier unit is coupled to the power outputs of different AC transformer units .

6. The power system according to any of the preceding claims, wherein each rectifier (35) of the same rectifier unit (31, 32, 33) is coupled to the power outputs of the at least two AC transformer units (21, 22, 23) such that each rectifier (35) receives AC electric power at a different predetermined phase.

7. The power system according to any of the preceding claims, wherein each rectifier unit (31, 32, 33) is a 12-pulse, 18-pulse or 24-pulse rectifier unit.

8. The power system according to any of the preceding claims, wherein each AC transformer unit (21, 22, 23) comprises or consists of an AC transformer having a primary winding and having two, three, four or more secondary windings (25), each secondary winding (25) providing one of the at least two power outputs.

9. The power system according to any of the preceding claims, wherein the power system comprises at least two power system sections (11, 12, 13), each power system section comprising one of said transformer units (21, 22, 23), one of said rectifier units (31, 32, 33) and one of said DC distribution busses (41, 42, 43), wherein for each power system section, at least one power output of the AC transformer unit is coupled to a rectifier of the rectifier unit and wherein the output of each rectifier of the rectifier unit is coupled to the DC power distribution bus for providing DC power to the DC power distribution bus.

10. The power system according to claim 9, wherein each power system section (11, 12, 13) comprises a variable speed drive (110, 120, 130), in particular a multi-drive, wherein the rectifier unit (31, 32, 33) and the DC power distribution bus (41, 42, 43) form part of the variable speed drive (110, 120, 130), the DC power distribution bus constituting a DC link of the variable speed drive.

11. The power system according to any of the preceding claims, wherein the least two AC transformer units (21, 22, 23) comprise a first AC transformer (21) having at least a first and a second power output and a second AC transformer (22) having at least a first and a second power output, wherein the at least two rectifier units comprise a first rectifier unit (31) associated with a first of the DC power distribution busses (41) and a second rectifier unit (32) associated with a second of the DC power distribution busses (42), wherein the first power output of the first AC transformer (21) is coupled to a first rectifier (35) of the first rectifier unit (31) and the second power output of the first transformer (21) is coupled to a second rectifier (35) of the second rectifier unit (32), and wherein
the first power output of the second AC transformer (22) is coupled to a first rectifier of the second rectifier unit (32) and the second power output of the second AC transformer (22) is coupled to a second rectifier of the first rectifier unit (31).

12. The power system according to any of the preceding claims, wherein the at least two AC transformer units comprise at least a first, a second and a third AC transformer unit (21, 22, 23), wherein each AC transformer unit comprises at least three power outputs which are phase shifted with respect to each other, and
wherein the at least two rectifier units comprise at least a first, a second and a third rectifier unit (31, 32, 33) each having at least three rectifiers (35).

13. The power system according to claim 12, wherein each rectifier unit (31, 32, 33) has one rectifier connected to a power output of the first AC transformer unit (21), one rectifier connected to a power output of the second AC transformer unit (22), and one rectifier connected to a power output of the third AC transformer unit (23).

14. The power system according to claim 12, wherein of each rectifier unit, two rectifiers (35) are connected to the same AC transformer unit (21, 22, 23) and at least one rectifier is connected to a different AC transformer unit (21, 22, 23).

15. A method of providing a power system for a floating vessel, comprising the steps of
- providing at least two AC transformer units (21, 22, 23) adapted to provide transformation of AC electric power, each AC transformer unit comprising a power input and at least two power outputs for providing AC electric power,
- coupling the power input of the at least two AC transformer units (21, 22, 23) to an AC power supply system of the floating vessel,
- providing at least two rectifier units (31, 32, 33) receiving AC electric power from the at least two transformer units, wherein each rectifier unit (31, 32, 33) comprises at least two rectifiers (35) for providing DC electric power,
- coupling each rectifier (35) to a different power output of the at least two transformer units (21, 22, 23) for receiving AC electric power,
- providing at least two DC power distribution busses (41, 42, 43) configured to distribute DC electric power to one or more loads,
- coupling the at least two DC power distribution busses (41, 42, 43) to the at least two rectifier units (31, 32, 33) for receiving DC electric power from the at least two rectifier units (31, 32, 33),
wherein the coupling is performed such that in operation, each of the DC power distribution busses (41, 42, 43) is supplied with electric power via at least two of the AC transformer units (21, 22, 23).
